# EUROPEAN PATENT SPECIFICATION

(11) **EP 0 827 126 B1**
(45) Date of publication and mention of the grant of the patent: **10.12.2003**
(21) Application number: 97114778.0
(22) Date of filing: 26.08.1997
(51) Int. Cl.: G08G 1/0968

(54) **Land vehicle navigation apparatus with local route guidance selectivity and storage medium therefor**
Landfahrzeugsnavigationsgerät mit lokaler Routenführungsselektivität und Speichermedium dafür
Appareil de navigation pour véhicule terrestre avec sélection de guidage local d'itinéraire et moyen de stockage à cet effet

(30) Priority: 30.08.1996 JP 23101996
(43) Date of publication of application: 04.03.1998
(73) Proprietor: AISIN AW CO., LTD., Anjo-shi Aichi-ken 444-11 (JP)
(72) Inventor: Watanabe, Kazuyuki, c/o Aisin Aw Co., Ltd., Anjo-shi, Aichi-ken 444-11 (JP)
(74) Representative: Pellmann, Hans-Bernd, Dipl.-Ing.

(56) References cited:
- EP-A- 0 638 887
- US-A- 4 782 447

## Description

The present invention relates generally to mobile electronics, and more particularly to land vehicle navigation method and apparatus for providing route guidance by setting a destination location and pass-through points. The invention also relates to storage media with built-in programs for execution of processings including a pass-through point judgment.

Conventionally, in the vehicle navigation apparatus, route guidance has been performed by setting a destination, pass-through point, facility to be seen and the like via telephone input, fifty-character voice unit input, and others. In this case, the places or locations to be set are registered in advance as memory locations, thereby allowing these registered locations to be later used in setting the destination and pass-through point (s) .

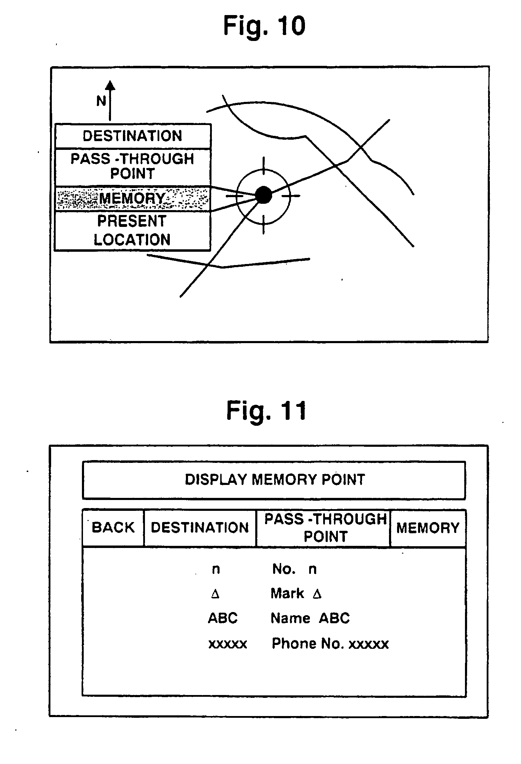

By way of example, where an input operation is effected when a cursor is moved by a remote controller or the like on a guidance screen of vehicle navigation apparatus to reach a target point (memory location), a mode selection menu of a destination, pass-through point, memory, and present position is displayed as shown in Fig. 10. If the item "memory" is selected here, then a facility placed nearest to the cursor position is searched for causing such facility name "ABC" to be displayed along with its register number, mark, telephone number, etc. as shown in Fig. 11. Upon depression of a memory button this will be registered as a memory location. The location as registered in this way will be able to be displayed in a list format; for example, a list is displayed as shown in Fig. 10 allowing this memory location to be set as a destination upon depression of a destination button, or alternatively allowing it to be set as a pass-through point when a pass-through point button is depressed.

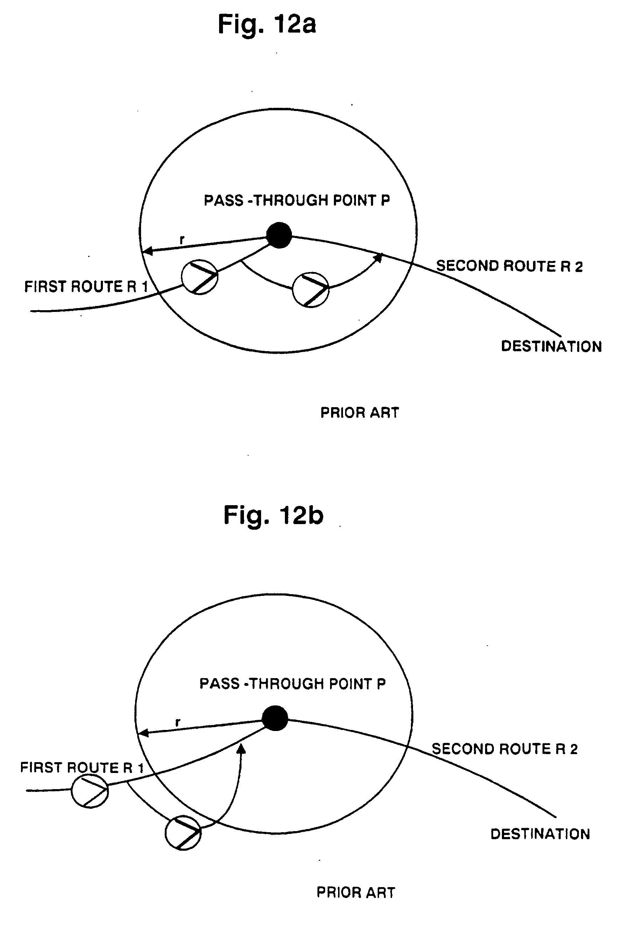

Incidentally, where a pass-through point P is set in a guidance route as shown in Fig. 12, when a vehicle travels along a first route R1 to enter the inside of a circle (pass-through judgment area) of a radius r defined with the pass-through point P being as its center, e.g. a circle measuring 50 m in radius as shown in Fig. 12a, judgment is made to assume that the vehicle would have passed through the pass-through point P forcing the route segment under guidance to be changed over or switched to the section of a second route R2.

In this way, it will not be judged that the vehicle has passed through the pass-through point P unless it actually enters the inside of such pass-through judgment area extremely near the pass-through point P. In other words, if the vehicle becomes out of the route without approaching the inside of the pass-through judgment area as shown in Fig. 12b, it will possibly happen that the apparatus begins searching for a route coupled to the first route R1 toward the pass-through point P.

Accordingly, even when an attempt is made before the pass-through judgment area to change or modify the travel plan to guidance of the second route without penetrating the pass-through point P, any intended route for connection to the second route R2 will not be searched for while still continuing to search for a route coupled to the first route R1 without any extra operations; therefore, where it is desired to switch to the guidance relating to the second route R2, it should be required that a similar search be again executed by operations based on the menu on the guidance screen.

As apparent from the foregoing, a vehicle operator including a driver does not always pass through his once set pass-through point. For instance, it will possibly occur that while certain pass-through point was set as a take-a-rest location in the midway of a travel to a destination, the driver changes his mind after taking a rest before such pass-through point as presently set, to go directly to the destination without stopping at the pass-through point. In this case, the prior art apparatus requires extra or additional operations for erasing such path-through point and for effecting a search for a new route to the destination, which would result in an increase in complexity of operation.

EP-A-0 638 887 discloses a navigation system to be mounted on a vehicle for carrying out a route search and displaying the searched route. Traffic jam information and the like are obtained by an beacon receiver and an input part inputs time as a driving condition. An ECU executes a predetermined calculation based on map data of a CD-ROM and traffic jam data and to obtain a range and routes reachable within the input time and to display the same. In case of residual fuel as a condition, the reachable range by this fuel is displayed. A display of gasoline stands as information for expanding reachability is also executed. Hence, a driver can plan a driving based on these information. Also, a reachable range within two hours is displayed and the use of railways is guided when the driver cannot reach the destination within a predetermined time.

US 4 782 447 discloses a navigation system and method for guiding a vehicle along a selected route of travel to a destination from a starting point using a display unit. In the navigation system, a positional relationship between a start road branched from a first known branching point (a start intersection from which a guidance of the vehicle along the selected route of travel is initiated) and entrance direction of the vehicle toward the first known branching point is distinguishably displayed on the screen of a display unit after the selection of the route of travel from the starting point to the destination. Thus the vehicle can enter the start road at the first known branching point even if it has reached the first known branching point via any arbitrary route of travel from the starting point.

It is an object of the present invention to provide an improved apparatus for providing route guidance for land vehicles.

It is another object of the invention to provide vehicle navigation apparatus capable, where a pass-through point is set along a guidance route, of easily switching to guidance with respect to a next route segment following a pass-through point without entering the inside of a pass-through judgment area near the pass-through point.

It is yet another object of the invention to provide an storage medium storing therein one or more programs adaptable for use in vehicle navigation systems capable, where a pass-through point is set along a guidance route, of easily switching to guidance with respect to a next route segment following a pass-through point without entering the inside of a pass-through judgment area near the pass-through point.

To attain the foregoing objects the present invention provides a vehicle navigation apparatus as defined in claim 1 or any one of the dependent claims.

Further, the invention provides a storage medium as defined in claim 4. In accordance with an aspect of the invention, the vehicle navigation apparatus thus includes a present position detector for detecting a present position, a location setter for setting a pass-through point or a destination location, a route search device for calculation of a route to the destination through the pass-through point, a judgment area setter for setting a first judgment area for use in judging whether the pass-through point as set by the location setter is passed and a second judgment area for use in permitting selection of whether guidance to the pass-through point is necessary or not, and a control unit for providing control while enabling selection of whether the guidance to the pass-through point is necessary or not under the condition that the present position detected by the present position detector is judged to be within the second judgment area, and for providing control to perform next guidance by judging that the pass-through point was passed under the condition that the present position is within the first judgment area.

These and other objects, features and advantages of the invention will be apparent from the following more particular description of preferred embodiments of the invention; as illustrated in the accompanying drawings.

### BRIEF DESCRIPTION OF THE DRAWINGS

Fig. 1 is a diagram showing a configuration of land vehicle navigation apparatus in accordance with one preferred embodiment of the invention.
Figs. 2a to 2e are diagrams each showing part of a road data file as employed in the apparatus of Fig. 1.
Fig. 3 is a diagram for explanation of the flow of an entire system of the vehicle navigation apparatus embodying the invention.
Fig. 4 is a diagram showing a registered point data structure.
Fig. 5 is a diagram for explanation of a pass-through point judgment method also embodying the invention.
Fig. 6 is a diagram for explanation of a case where a vehicle enters a pass-through verify area and yet travels toward a second route with the pass-through point bypassed.
Fig. 7 is an explanation diagram of a case where the vehicle enters the pass-through judgment verify area and is out of a first route then returns at the first route.
Fig. 8 is a diagram for explanation of a case where the vehicle enters a first region after passing through a second region, and then goes out of a first route.
Fig. 9 is a diagram for explanation of the flow of a pass-through point judgment processing of the present invention.
Fig. 10 is a diagram showing a guidance screen displaying a mode selection menu.
Fig. 11 is a diagram showing a display screen of a memory point.
Fig. 12a and 12b are diagrams for explanation of one typical prior art method for pass-through judgment of a pass-through point.

### DETAILED DESCRIPTION OF THE INVENTION

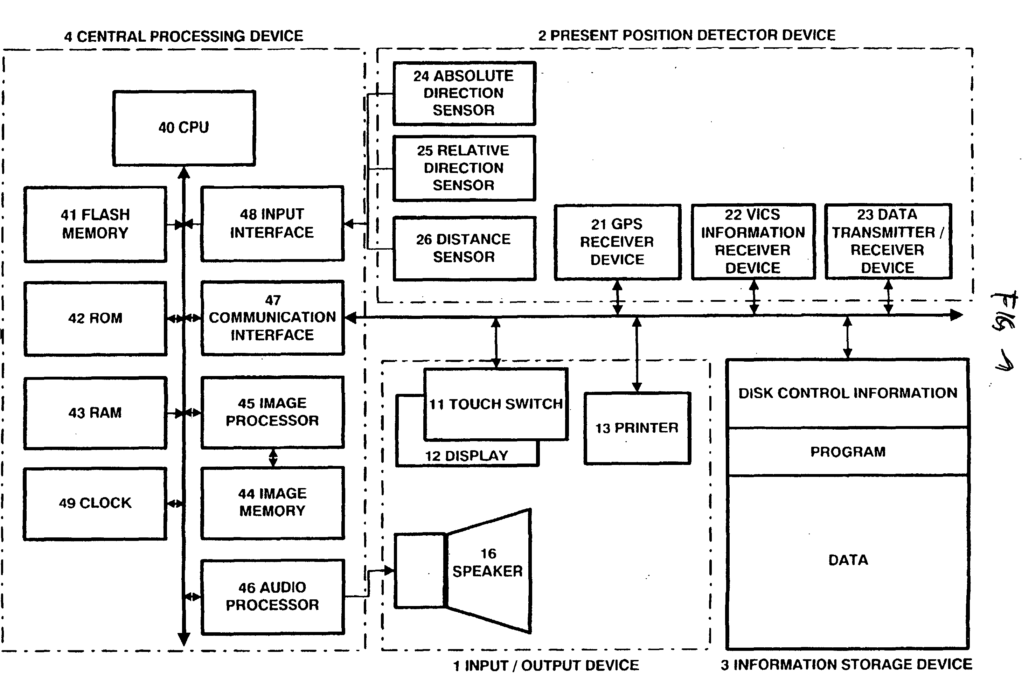

Referring to Fig. 1, land vehicle navigation apparatus in accordance with one preferred embodiment of the instant invention is shown, which is constituted from an input/output (I/O) device 1 for inputting and outputting information as to route guidance, a present position detector 2 for detecting information concerning a present position of a vehicle, an information storage device 3 which records therein navigation data as required for calculation of routes, display/audio guidance data as necessary for route guidance, programs (applications and/or OS) and the like, and a central processing device 4 which performs display/audio guidance processings required for route search processings and route guidance and which also provides control over the entire system. First of all, the arrangement of respective devices will be explained below.

The I/O device 1 is provided with functions of instructing navigation processings to the central processor 4 in conformity with the vehicle operator's will and of printing out processed data, thereby permitting input of a target place or destination and output of guidance information via audio and/or display when required by the operator. As a means for attaining such functions, its input section has a touch switch 11 and operation switches for input of a destination based on the telephone number and map coordinates thereof as well as for request of route guidance. Obviously, this may alternatively be an input device such as a remote controller or the like. In addition, an output section includes a display unit 12 which displays input data and also automatically displays route guidance as graphics images on the screen upon reception of a request from the vehicle operator, a printer 13 which produces hard copies of data as processed by the central processor 4 and those data as stored in the storage 3, and a speaker 16 for output of resultant route guidance using voices.

Here, there may be added a voice recognition device for enabling voice input and a record card reader for reading data recorded in IC cards or magnetic cards. There may also be added a data communication device which is for data communications between the navigation apparatus and certain information sources including an information center for storing therein data necessary for navigation and providing information via communication lines upon operators' request, and an electronic personal information management tool prestoring operators' specific data such as map data, destination data and the like.

The display unit 12 is constituted by a color CRT or color liquid crystal display panel, for color-display outputting all the screens necessary for navigation including a route set screen, route segment drawing screen, traffic intersection drawing screen and the like based on map data and guidance data to be processed by the central processor 4, and also for displaying on a present screen some buttons for use in performing operations for setting route guidance and changing guidance and screens during route guidance. In particular, pass-through intersection information such as the name or title of an intersection to be passed through will be color-displayed on the route-segment drawing screen in a pop-up manner at any time as necessary.

The display 12 is provided within an instrumental panel near the driver's sheet, thus enabling the driver by himself to affirm a present location of his or her vehicle by viewing a road-segment drawing while acquiring therefrom information as to a future route from here. The display 12 is also provided with a touch switch 11 corresponding to the display of function buttons, and is thus arranged so that the aforesaid operations are effected on the basis of a signal as input upon touch of an appropriate button. An input signal generator which is structured from the buttons, the touch switch and the like may constitute the input section.

The present position detector 2 includes a global positioning system (GPS) receiver 21 for acquiring information by utilizing the presently available GPS for vehicles. The detector 2 also includes a vehicle information communication system (VICS) data receiver 22 for acquiring information by use of FM multiple broadcasts, radio wave beacon, optical beacon, and equivalents thereto. A data transmitter/receiver 23 is provided for bidirectionally communicating-by use of a mobile telephone set, personal computer, or the like-information with the information center (ATIS, for example) and with other vehicles. Detector 2 comes with sensors including an absolute direction sensor 24 for detecting the travelling direction of the vehicle on the absolute direction basis by utilizing geomagnetism, a relative direction sensor 25 for detection of the vehicle's travelling direction on the relative direction basis by use of a steering sensor or gyro sensor, and a distance sensor 26 for detection of the travelled distance of the vehicle from the number of rotation of a whole shaft. Detector 2 operates to transmit and/or receive road information and traffic information that are information concerning the vehicle's travel and to detect information as to the present vehicle position and further to transmit and receive information as to the present position.

The storage 3 is an external large-capacity memory device which stores therein programs and data for navigation, and may be comprised of a compact disc read only memory (CD-ROM). The programs may involve a program for use in performing processings such as route search, a program for use in executing a pass-through judgment as to a pass-through point as will be described later in the description of embodiments, a program for selectably controlling whether or not guidance to such pass-through point is necessary; a processing program as will be later shown in a flowchart in connection with one embodiment, a program for carrying out display output control required for route guidance and voice output control as required for voice guidance as well as associated data, and further display information data required for route guidance and map display. The data may be all of the storage data necessary for the navigation apparatus which may consist of several kinds of data files such as map data, search data, guidance data, map-matching data, destination data, registered location data and the like. Note that the present invention may also be applied to those of the type which are designed to employ the CD-ROM for storage of data only with the programs being stored in the central processor.

The central processor 4 includes a CPU 40 for performing a variety of kinds of arithmetic processing tasks, a "flash" electrically erasable programmable read only memory (EEPROM) 41 for reading programs out of the CD-ROM of the storage 3 and storing the same therein, a read-only memory (ROM) 42 for storage of a program for executing program-check and update processings of the flash memory 41 (program loader) , a random access memory (RAM) 43 for temporarily storing therein searched route guidance information such as the point coordinates of a destination being set presently, road name code No. and the like along with data being subject to arithmetic processing, an image memory 44 such as a video RAM (VRAM) for storage of image data to be used for screen display onto the display, an image processor 45 which fetches image data from the image memory 44 on the basis of a display output control signal from the CPU 40 and applies thereto image processings to output the result to the display 12, an audio processor 46 which synthesizes together an audible voice, phrase, sentence with one meaning, sound and the like as read from storage 3 in response to receipt of an audio output control signal from CPU 40 and which converts a synthesized signal into an analog signal that is output to the speaker 16, a communication interface 47 for handling I/O data over communication channels, a sensor input interface 48 for fetching sensor signals from the present position detector 2, a clock 49 for writing date and time into internal dialog information, and others. Here, the apparatus is arranged so that route guidance is provided by using both screen display and audible output while allowing the driver to select the presence or absence of audio or voice output.

It should be noted that the program for performing the aforesaid update processing may alternatively be stored in the external storage device. All of the programs in accordance with the present invention as well as the other programs required for performing navigation may be stored in the CD-ROM which is one external storage medium; alternatively, part or all of such programs may be stored in the ROM 42 on the side of the main body.

A variety of kinds of navigation functions may be attained by performing arithmetic processing procedures in such a way that the data and programs stored in this external storage medium are input as external signals to the central processor as implemented within the main body of the navigation apparatus.

The navigation apparatus embodying the instant invention includes a relatively large capacity of flash memory 41 for reading certain program(s) out of the CD-ROM that is one external storage device as described previously, and a small capacity of ROM 42 which prestores therein a program (program loader) for performing a start-up processing of a CD. The flash memory 41 is the one which continues holding therein once-stored information after interruption of power supply thereto; namely, it is a nonvolatile memory. And, it performs the CD start-up processing by causing certain program of the ROM 42 acting as the program read-in means to get started for checking the program stored in the flash memory 41 while reading disk control information and the like of the CD-ROM of the information storage 3. The program loading (update processing) is carried out by judgment based on this information and the status of the flash memory 41.

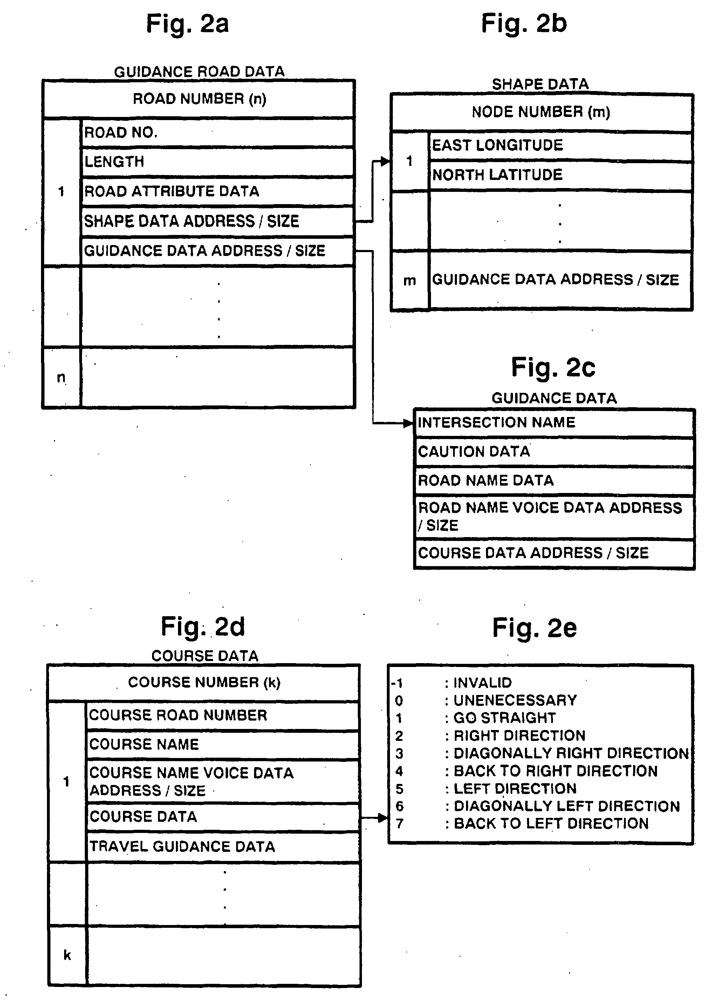

See Figs. 2a-2e, which show one example of the configuration of main data files as stored in the CD-ROM 3 shown in Fig. 1. As shown in Fig. 2a, a guidance road data file comes with data items necessary for calculating a route or routes at the route calculation device and for performing route guidance. Each of the road number n consists of a road number, length, road attribute data, address and size of shape data, and address and size of guidance data. The road number is set independently of the directions (approaching path, return path) with respect to each road between branch points. The shape data may have, as shown in Fig. 2b, coordinate data that consist of the east longitude and north latitude with respect to each of the node number m when each road is divided into a plurality of nodes (section).

As shown in Fig. 2c, the foregoing guidance data may consist of an intersection (or branch point) name, caution data, road name data, road name voice data address/size, and course 'data address/size.

As shown in Fig. 2d, the course data may consist of a course road number, course name or title, course name voice data address/size, course direction data, and travel guidance data. The course name also includes a direction name. Also, as shown in Fig. 2e, the course direction data may be the data indicating invalidity (no use of the destination direction data), unnecessity (no guidance performed), and several direction information items such as the go-straight, right direction, diagonally right direction, back-to-the-right direction, left direction, diagonally left direction, and back-to-the-left direction.

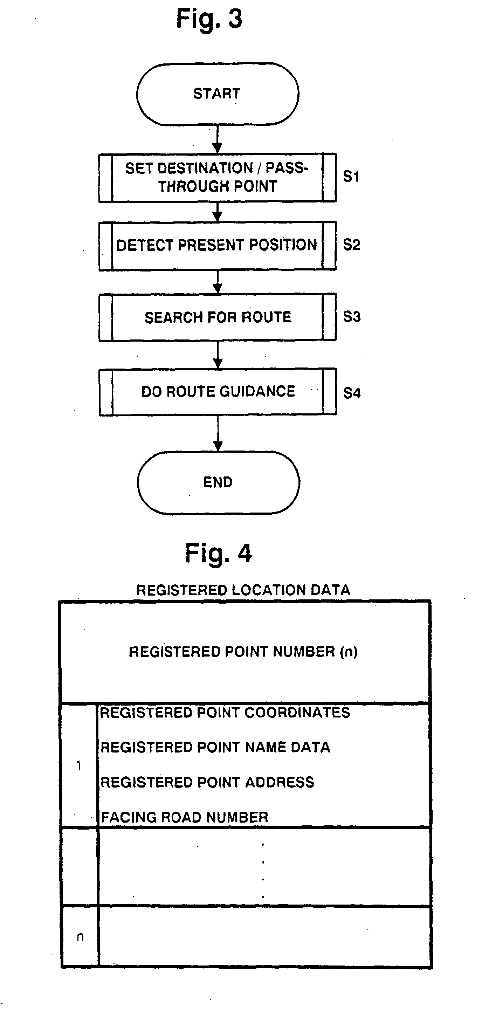

As shown in Fig. 3, when a program(s) is/are read out of the storage 3 into the CPU 40 of the central processor 4, the program for route guidance gets started. Set a destination by use of a destination name such as a place name, facility name or the like, telephone number, administrative address, registered point, road name and the like (step S1); next, let the present position detector 2 detect a present position for displaying a nearby place map with such detected present position being as its center while simultaneously displaying the name of the present position and others (step S2) ; then, perform a route search in a range from the present position toward the destination (step S3). Once the route is determined, route guidance and display will be recurrently performed until the vehicle actually arrives at the destination while allowing the present position detector 2 to continue tracking the present position loci (step S4). Where an input of a temporary "stop-and-stay point" setting is made before the arrival at the destination, a search area is set to perform a search again or "re-search" within the search area causing similar route guidance to be itelatively effected until arrival at the destination.

See Fig. 4 which depicts a registered location data structure. As shown, the registered location data may contain therein the coordinates of each registered location point, registered point name data, registered point address, road number the registered point faces, and the like. The registered point name data may involve pronunciation of registered point in order to enable input of fifty voice units; for those subject to Chinese KANJI character display or Japanese KATAKANA character display as a registered point list during search procedures, corresponding KANJI or KATAKANA characters or equivalents thereto are stored therein. The registered point address data may contain each registered point's existence position or whereabouts as indicated by its prefecture, city, town and the like in a local hierarchical structure.

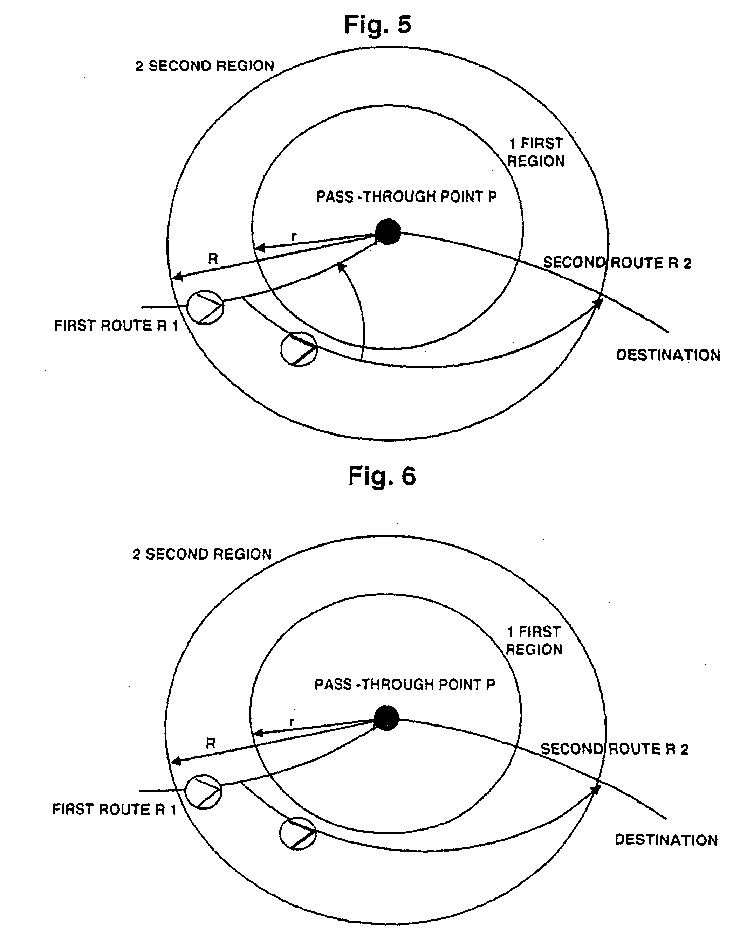

An operation of the illustrative vehicle navigation apparatus, including the pass-through point judgment, will now be described in conjunction with Figs. 5-10. Note that Fig. 5 is for explanation of a pass-through point judgment method of the present invention. Note also that any pass-through point and destination will be subject to a location setting by a method shown in Fig. 10.

As shown in Fig. 5, when a pass-through point P is set along a guidance route with a route to the pass-through point being represented by a first route R1 and with a route that extends with the pass-through point as its start point being indicated by a second route R2, the inside of a circle (first region) of its radius r with the point P as its center is represented by a pass-through judgment area whereas the inside of a circle (second region) of radius R (R > r, several hundreds meters to several kilometers, for example) with the point P as its center is represented by a pass-through judgment verify area. The first region is the pass-through judgment area as explained in connection with Fig. 12: when the vehicle enters this area, or alternatively, when it becomes out of the first route after entering this area, it is to be determined that the vehicle has passed through the pass-through point P. The second region is a pass-through judgment verify area as set in the present invention. When the vehicle enters this area or when it becomes out of the first route after entering this area, the following actions will be taken: a message "CHANGE TO GUIDANCE TO NEXT POINT?" is displayed; when a button is depressed or a corresponding remote operation is done, it is judged that the vehicle has penetrated the pass-through point P so that a connection route to the second route R2 is then searched for while changing to guidance to the second route. In cases where such guidance change to the second route is not selected, a route coupled to the first route R1 is searched for allowing guidance based on the same to be carried out. In other words, when the vehicle enters the pass-through judgment verify area, it is possible by execution of a single switch operation-without having to do complicated operations such as turning back to the menu screen for performing a re-search as has been in the prior art-to select one from the two options: turning back to the first route, or going to the second route with the pass-through point being bypassed.

See Fig. 6 which is for explanation of a case where the vehicle travels directly to the second route without passing through the pass-through point P. When the vehicle enters the second region, or alternatively, when it enters the second region and then becomes out of the first route R1, the above-mentioned message "CHANGE TO GUIDANCE TONEXT POINT?" is displayed. Here, when a guidance change is selected by switch operations, a route connected to the second route is searched for permitting execution of guidance based on the search results.

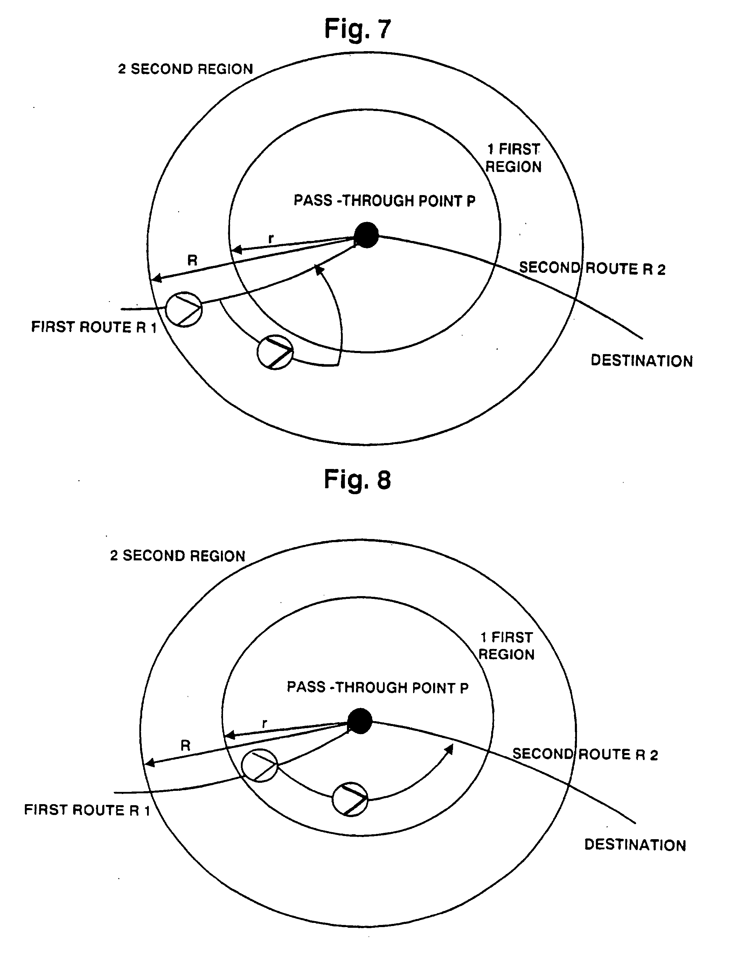

Fig. 7 is an explanation diagram of a case where the vehicle is out of the first route R1 after entrance to the second region, and then attempts to return at the original route. As shown, when it becomes out of the first route R1 after entering the pass-through judgment verify area, the message "CHANGE TO GUIDANCE TO NEXT POINT?" is displayed. When it is selected by switch operations that such guidance change is not to be executed, a route coupled to the first route R1 is searched so that guidance is performed based on such search results.

See Fig. 8, which is for explanation of a case where the vehicle passes through the second region and then enters the first region. As illustrated, when the vehicle enters the inside of the pass-through judgment verify area, or alternatively, when it enters the pass-through judgment area and is out of the route, it is judged that it has penetrated the pass-through point P causing guidance to be changed to that toward a next road segment (second route R2) .

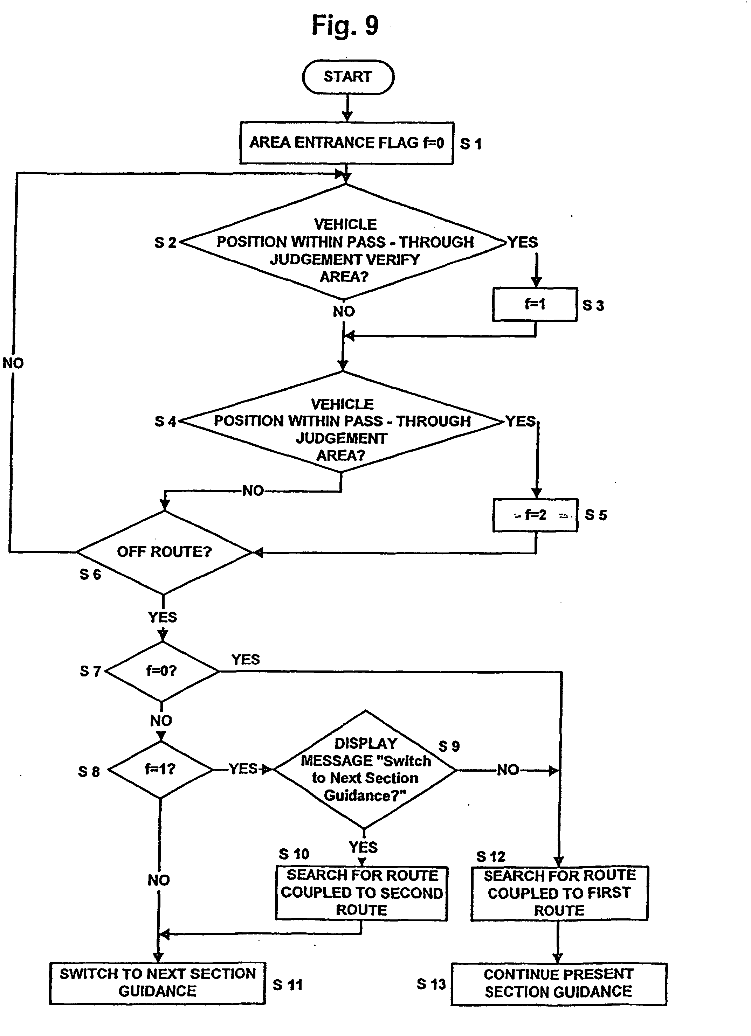

See Fig. 9 which is for explanation of the flow of the pass-through point judgment processing of the present invention. In the pass-through judgment processing of the present invention, an area intrusion flag f which indicates whether the vehicle enters the pass-through judgment area or the pass-through judgment verify area is used allowing a decision to be done as to pass-through judgment or message display of guidance change to a next section in view of the area intrusion flag f.

As shown in Fig. 9, when the route guidance gets started, the area intrusion flag f is set at 0 (step S1). The present position detector 2 of Fig. 1 operates to detect a present vehicle position. If the present vehicle position is within the pass-through judgment verify area (second region) then let the area intrusion flag f = 1 (step S2Y, step S3). After further traveling of the vehicle, when it is detected that the present vehicle position is within the pass-through judgment area (first region), let the area intrusion flag f = 2 (step S4Y, step S5). If it does not reach the pass-through judgment verify area, then the area intrusion flag is f = 0. Next, determine whether it is an off-route (out of the first guidance route leading to the pass-through point) (step S6). If not out of the first guidance route (step S6N) then the prescribed processings will be repeated; if the vehicle is detected to be out of such route and at the same time the area intrusion flag is f = 0, then a search processing is performed to find a route coupled to the first guidance route (step S6Y, step S7Y, step S12). If out of the first guidance route and simultaneously the area intrusion flag is f ≠ 0 and f = 1 (step S6Y, step S7N, step S8Y), this means that the vehicle is off-route within the pass-through judgment verify area; accordingly, the message "CHANGE TO GUIDANCE TO NEXT SECTION?" is displayed (alternatively, the same is audibly issued, or the screen and voice notice may be used at a time). When a switch operation is done to select a change of guidance to a next road segment (step S9Y), a route search is made to find a route connected to the second guidance route with the pass-through point being as its start point (step S10) causing guidance to be changed to the next road segment (step S11). Where such next-section guidance change is not selected by switch operations (step S9N), a search processing is carried out to find a route coupled to the first guidance route allowing guidance to be performed with respect to the present section (step S12, step S13). If f ≠ 1, namely, f = 2 at the step S8, then the vehicle was under off-route within the pass-through judgment area; therefore, it is judged that it passed through the pass-through point causing guidance to be changed to that for a next section (step S8N, step S11).

It should be noted that while in the processing flow of Fig. 9 the off-route at step S6 is used as a criterion, this may alternatively be modified in a way such that without employing such out-of-the-route criterion, the following processings are performed with the vehicle's entrance to the pass-through judgment area or the pass-through judgment verify area being as the criterion therefor.

As has been described above, according to the present invention, a separate pass-through judgment verify area is set outside the pass-through judgment area for making it possible, where a vehicle enters the pass-through judgment verify area, to perform with easy operations selection as to whether it passes through the pass-through point without having to actually enter the pass-through judgment area, which in turn enables useability to be improved in cases where a travel plan change or modification is demanded to eliminate penetration of such pass-through point.

While the invention has been described with reference to specific embodiments, the description is illustrative of the invention and is not to be construed as limiting the invention. Various modifications and applications may occur to those skilled in the art without departing from the scope of the invention as defined by the appended claims.

## Claims

1. Vehicle navigation apparatus comprising:
present position detector means (2) for detecting a present position;
location entry means (1) for setting at least one of a pass-through point (P) and a destination location;
route search means (4) for calculation of a route to the destination location through the pass-through point (P);
judgment area entry means (1) for setting a first judgment area for use in judging whether the pass-through point as set by said location entry means is passed, and a second judgment area for use in controlling selectively whether guidance to the pass-through point (P) is necessary; and
control means (4) for providing control while permitting selection of whether the guidance to the pass-through point is necessary under a condition that the present position detected by said present position detector means (2) is judged to be within said second judgment area, and for providing control to perform next guidance by judging that the pass-through point (P) was passed under a condition that said present position is within the first judgment area.

2. Vehicle navigation apparatus according to claim 1, wherein
said judgment area entry means (1) is adapted for setting said second judgment area so as to include the first judgment area and be wider than said first judgment area; and
said control means (4) is adapted for providing control selectively whether the guidance to the pass-through point (P) is necessary under a condition that the present position detected by said present position detector means (2) is within the second judgment area and is yet out of the route, and for providing control to perform next guidance by judging that the pass-through point was passed under a condition that said present position is within the first judgment area.

3. The apparatus according to claim 1 or 2, wherein said control means (4) controls said route search means so as to search for a new route while erasing the pass-through point (P) as presently set under a condition that the guidance to the pass-through point is selected as unnecessary.

4. A storage medium for storage of a program for tracking a present position and providing guidance by calculating a route to a predetermined pass-through point (P) and a destination, said storage medium (3) storing therein a program comprising the steps of:
storing at least one of a pass-through point and a destination through a location setting; setting a first judgment area for use in judging whether the pass-through point being set through the location setting is passed, and a second judgment area for use in controlling selectively whether guidance to the pass-through point is necessary; and
providing control while permitting selection of whether the guidance to the pass-through point is necessary under a condition that the present position is judged to be within said second judgment area, and providing control to perform next guidance by judging that the pass-through point was passed under a condition that said present position is within the first judgment area.

## Patentansprüche

1. Fahrzeugnavigationsgerät mit
einer Ist-Positionserfassungseinrichtung (2) zur Erfassung einer gegenwärtigen Position,
einer Ortseingabeeinrichtung (1) zur Einstellung zumindest eines Durchgangspunkts (P) und eines Zielorts,
einer Routensucheinrichtung (4) zur Berechnung einer Route zu dem Zielort durch den Durchgangspunkt (P),
einer Beurteilungsbereichseingabeeinrichtung (1) zur Einstellung eines ersten Beurteilungsbereichs zur Verwendung bei der Beurteilung, ob der durch die Ortseingabeeinrichtung eingestellte Durchgangspunkt passiert worden ist, und eines zweiten Beurteilungsbereichs zur Verwendung bei einer selektiven Steuerung, ob eine Führung zu dem Durchgangspunkt (P) notwendig ist, und
einer Steuerungseinrichtung (4) zur Bereitstellung einer Steuerung, bei der eine Auswahl zugelassen wird, ob eine Führung zu dem Durchgangspunkt notwendig ist, unter der Bedingung, dass beurteilt wird, dass die durch die Ist-Positionserfassungseinrichtung (2) erfasste gegenwärtige Position innerhalb des zweiten Beurteilungsbereichs liegt, und zur Bereitstellung einer Steuerung zur Durchführung einer nächsten Führung durch Beurteilung, dass der Durchgangspunkt (P) passiert worden ist, unter der Bedingung, dass sich die Ist-Position innerhalb des ersten Beurteilungsbereichs befindet.

2. Fahrzeugnavigationsgerät nach Anspruch 1, wobei
die Ortseingabeeinrichtung (1) eingerichtet ist, den zweiten Beurteilungsbereich derart einzustellen, dass der erste Beurteilungsbereich enthalten ist und größer als der erste Beurteilungsbereich ist, und
die Steuerungseinrichtung (4) eingerichtet ist, eine selektive Steuerung, ob die Führung zu dem Durchgangspunkt (P) notwendig ist, unter der Bedingung bereitzustellen, dass die durch die Ist-Positionserfassungseinrichtung (2) erfasste Ist-Position sich innerhalb des zweiten Beurteilungsbereichs und außerhalb der Route befindet, und eine Steuerung zur Durchführung einer nächsten Führung durch Beurteilung, dass der Durchgangspunkt passiert worden ist, unter der Bedingung bereitzustellen, dass sich die Ist-Position innerhalb des ersten Beurteilungsbereichs befindet.

3. Gerät nach Anspruch 1 oder 2, wobei die Steuerungseinrichtung (4) die Routensucheinrichtung unter der Bedingung, dass die Führung zu dem Durchgangspunkt als unnötig ausgewählt worden ist, derart steuert, dass eine neue Route gesucht wird, während der gegenwärtig eingestellte Durchgangspunkt (P) gelöscht wird, unter der Bedingung, dass die Führung zu dem Durchgangspunkt als unnötig ausgewählt worden ist.

4. Speichermedium zum Speichern eines Programms zur Nachverfolgung einer gegenwärtigen Position und Bereitstellung einer Führung durch Berechnung einer Route zu einem vorbestimmten Durchgangspunkt (P) und einem Ziel, wobei das Speichermedium (3) ein Programm mit den Schritten speichert:
Speichern zumindest eines Durchgangspunkts (P) und eines Zielorts durch eine Ortseinstellung,
Einstellen eines ersten Beurteilungsbereichs zur Verwendung bei der Beurteilung, ob der durch die Ortseinstellung eingestellte Durchgangspunkt passiert worden ist, und eines zweiten Beurteilungsbereichs zur Verwendung bei einer selektiven Steuerung, ob eine Führung zu dem Durchgangspunkt notwendig ist, und
Bereitstellen einer Steuerung, bei der eine Auswahl zugelassen wird, ob die Führung zu dem Durchgangspunkt notwendig ist, unter der Bedingung, dass beurteilt wird, dass die Ist-Position sich innerhalb des zweiten Beurteilungsbereichs befindet, und Bereitstellen einer Steuerung zur Durchführung einer nächsten Führung durch Beurteilung, dass der Durchgangspunkt passiert worden ist, unter der Bedingung, dass die Ist-Position sich in dem ersten Beurteilungsbereich befindet.

## Revendications

1. Appareil de navigation pour véhicule comprenant :
un moyen de détection de position actuelle (2) pour détecter une position actuelle ;
un moyen d'entrée de lieu (1) pour établir au moins un élément parmi un point de passage (P) et un lieu de destination ;
un moyen de recherche d'itinéraire (4) pour calculer un itinéraire vers un lieu de destination passant par le point de passage (P) ;
un moyen d'entrée de zone de jugement (1) pour établir une première zone de jugement destinée à être utilisée pour juger si le point de passage établi par ledit moyen d'entrée de lieu est traversé, et une seconde zone de jugement destinée à être utilisée pour contrôler de manière sélective si le guidage vers le point de passage (P) est nécessaire ; et
un moyen de contrôle et de commande (4) pour contrôler tout en permettant de sélectionner si le guidage vers le point de passage est nécessaire dans une situation où l'on juge que la position actuelle détectée par ledit moyen de détection de position actuelle (2) se trouve dans ladite seconde zone de jugement, et pour fournir une commande afin de réaliser le prochain guidage en jugeant que le point de passage (P) a été traversé dans une situation où ladite position actuelle se trouve dans la première zone de jugement.

2. Appareil de navigation pour véhicule selon la revendication 1, dans lequel
ledit moyen d'entrée de zone de jugement (1) est adapté pour établir ladite seconde zone de jugement de sorte qu'elle comprenne la première zone de jugement et qu'elle soit plus large que ladite première zone de jugement ;
et
ledit moyen de contrôle et de commande (4) est adapté pour contrôler de manière sélective si le guidage vers le point de passage (P) est nécessaire dans une situation où la position actuelle détectée par ledit moyen de détection de position actuelle (2) se trouve dans la seconde zone de jugement et cependant en dehors de l'itinéraire, et pour fournir une commande afin de réaliser le prochain guidage en jugeant que le point de passage a été traversé dans une situation où ladite position actuelle se trouve dans la première zone de jugement.

3. Appareil selon la revendication 1 ou 2, dans lequel ledit moyen de contrôle et de commande (4) commande ledit moyen de recherche d'itinéraire de manière à rechercher un nouvel itinéraire tout en éliminant le point de passage (P) actuellement établi dans une situation où le guidage vers le point de passage est sélectionné comme étant inutile.

4. Support d'informations pour stocker un programme afin de suivre une position actuelle et de réaliser un guidage en calculant un itinéraire vers un point de passage prédéterminé (P) et vers une destination, ledit support d'informations (3) stockant un programme comprenant les étapes consistant à :
stocker au moins un élément parmi un point de passage et une destination par établissement d'un lieu ;
établir une première zone de jugement destinée à être utilisée pour juger si le point de passage qui est établi par établissement du lieu est traversé, et une seconde zone de jugement destinée à être utilisée pour contrôler de manière sélective si le guidage vers le point de passage est nécessaire ; et
contrôler tout en permettant de sélectionner si le guidage vers le point de passage est nécessaire dans une situation où l'on juge que la position actuelle se trouve dans ladite seconde zone de jugement, et fournir une commande afin de réaliser le prochain guidage en jugeant que le point de passage a été traversé dans une situation où ladite position actuelle se trouve dans la première zone de jugement.
